Europäisches Patentamt

(19) European Patent Office

Office européen des brevets

(11) Numéro de publication: **0 214 001 B1**

(12) **FASCICULE DE BREVET EUROPEEN**

(45) Date de publication du fascicule du brevet:
27.12.89

(21) Numéro de dépôt: 86401634.0

(22) Date de dépôt: 22.07.86

(51) Int. Cl.⁴: **F16F 1/36,** F16F 1/28, B60G 11/12

(54) Lame élastique en matériau composite travaillant en flexion.

(30) Priorité: 07.08.85 FR 8512079

(43) Date de publication de la demande:
11.03.87 Bulletin 87/11

(45) Mention de la délivrance du brevet:
27.12.89 Bulletin 89/52

(84) Etats contractants désignés:
AT BE CH DE FR GB IT LI LU NL SE

(56) Documents cités:
EP-A- 0 158 622
DE-B- 1 231 967
FR-A- 595 972
GB-A- 2 147 972
US-A- 2 635 869

(73) Titulaire: BERTIN & CIE, Zone Industrielle Boîte
postale 3, F-78373 Plaisir Cédex(FR)

(72) Inventeur: de Goncourt, Louis, 6, rue de Nungesser
Voisins-le-Bretonneux, F-78190 Trappes(FR)

(74) Mandataire: Colas, Jean-Pierre et al, Cabinet de
Boisse 37, avenue Franklin D. Roosevelt,
F-75008 Paris(FR)

ACTORUM AG

## Description

L'invention concerne une lame élastique en matériau composite travaillant en flexion et en particulier un ressort du type "ressort à lame" présentant dans son plan de symétrie vertical et sur au moins une partie de sa longueur une épaisseur croissant vers une de ses extrémités, et dans son plan horizontal, une largeur décroissant vers la même extrémité, l'extrémité de plus grande épaisseur présentant une ouverture susceptible de coopérer avec des moyens d'encastrement, l'axe de ladite ouverture étant dans le plan de symétrie vertical de la lame qui est dans le plan de flexion dans lequel s'exercent les efforts produisant le flexion.

Une telle lame est connue par exemple du brevet français Nº 2 516 455 et présente dans son plan de symétrie vertical et sur au moins une partie de sa longueur une épaisseur croissant vers une de ses extrémités, et dans son plan horizontal une largeur décroissant vers la même extrémité. Cette lame est utilisée comme suspension d'un véhicule et porte à son extrémité épaisse une liaison avec un support de roue. Cette liaison est constituée d'un insert tubulaire métallique fixé dans l'extrémité et comportant, à l'intérieur, un siège sur lequel vient s'appuyer l'extrémité sphérique d'un pivot de fusée qui présente de ce fait deux degrés de liberté, longitudinal et transversal, par rapport au ressort. Il n'y a pas dans le ressort d'efforts tranchants liés à un moment ou encastrement importants par suite de la liberté relative du support de roue monté sur rotule.

Lorsqu'une lame semblable est utilisée dans un montage ne devant présenter qu'un degré de liberté, correspondant, par exemple, à sa rotation autour d'un axe traversant son extrémité, on est confronté à de sérieux problèmes dus à l'introduction d'efforts tranchants prohibitifs qui entraînent des délaminages rapides du composite et des pressions de matage importantes. De tels problèmes se présenteraient si l'on voulait, par exemple, dans les brevets français Nº 1.570.587 et 2.165.317, remplacer les ressorts à lames métalliques par une lame en composite. En effet, le dispositif stabilisateur de caravanes et remorques routières qui y est décrit comporte deux ressorts à lames disposés, dans leur plan horizontal, le long du timon du véhicule tracté, maintenu à leur extrémité épaisse à la plaque d'attelage par deux axes qui les traversent verticalement et à leur extrémité mince par l'extrémité mobile d'un vérin à vis fixé sur le timon. L'extrémité du timon est normalement fixée à la boule d'attelage du véhicule tracteur disposée entre les deux axes de maintien des ressorts. Un dispositif de freinage est prévu entre le ressort et l'axe pour limiter la rotation dans le plan horizontal. L'extrémité épaisse du ressort se comporte comme une barre rigide ayant un seul degré de liberté dans le plan horizontal. Les efforts tranchants qui se produisent dans le plan vertical sont transmis sans problème majeur du ressort métallique à l'axe et de là au châssis du véhicule.

Le dispositif stabilisateur ci-dessus décrit se présente donc comme un ensemble de deux ressorts fixés à une extrémité, par l'intermédiaire du frein, aux axes, maintenus sur la plaque d'attelage par des goupilles, et à l'autre extrémité au vérin accroché au timon du véhicule tracté. Lors de l'accrochage ou du décrochage de la remorque, il est nécessaire soit de monter cet ensemble axe-ressort-vérin sur la plaque d'attelage, soit de l'en démonter en le tenant d'une seule main, l'autre servant au verrouillage ou déverrouillage des axes. Il est donc souhaitable que son poids soit le plus faible possible, or le ressort à lames représente près de la moitié du poids de l'ensemble. En outre afin d'éviter, dans la mesure du possible, l'usure des lames et leur corrosion, ces ressorts à lames sont abondamment garnis de graisse, ce qui ne facilite par leur manipulation et ne la rend pas particulièrement agréable.

Actuellement l'allègement du vérin n'est pas envisageable, la seule possibilité qui s'offre est le remplacement des ressorts à lames métalliques par des ressorts en composite qui sont, à puissance égale, plus légers et qui éliminent les phénomènes d'usure et de corrosion liés aux ressorts métalliques.

Afin de tenir compte de la plus grande sensibilité des ressorts en composite aux efforts tranchants et aux pressions de matage, l'invention propose la réalisation d'un dispositif d'encastrement à l'extrémité épaisse du ressort n'introduisant pas d'efforts de cisaillement.

Selon l'invention, l'ouverture dans la lame est constituée d'au moins une boucle formée par l'enroulement d'un composant fibreux constituant la lame et chacune des faces interne et externe de ladite boucle prend appui sur sa hauteur et par tout ou partie de sa périphérie sur un élément d'appui correspondant des moyens d'encastrement.

Les explications et figures données ci-après à titre d'exemples permettront de comprendre comment l'invention peut être réalisée.

Les figures 1 et 2 montrent schématiquement la répartition des efforts dans une lame maintenue par un encastrement normal, et une lame maintenue par un dispositif d'encastrement selon l'invention.

Les figures 3 et 4 représentent des éléments d'appui distincts qui sont combinés dans une lame selon l'invention, représentée complètement aux figures 5 et 6, respectivement en vue de dessous et en coupe selon VI–VI de la figure 5.

Les figures 7 et 8 montrent deux autres exemples de réalisation d'un dispositif d'encastrement d'une extrémité de lame composite.

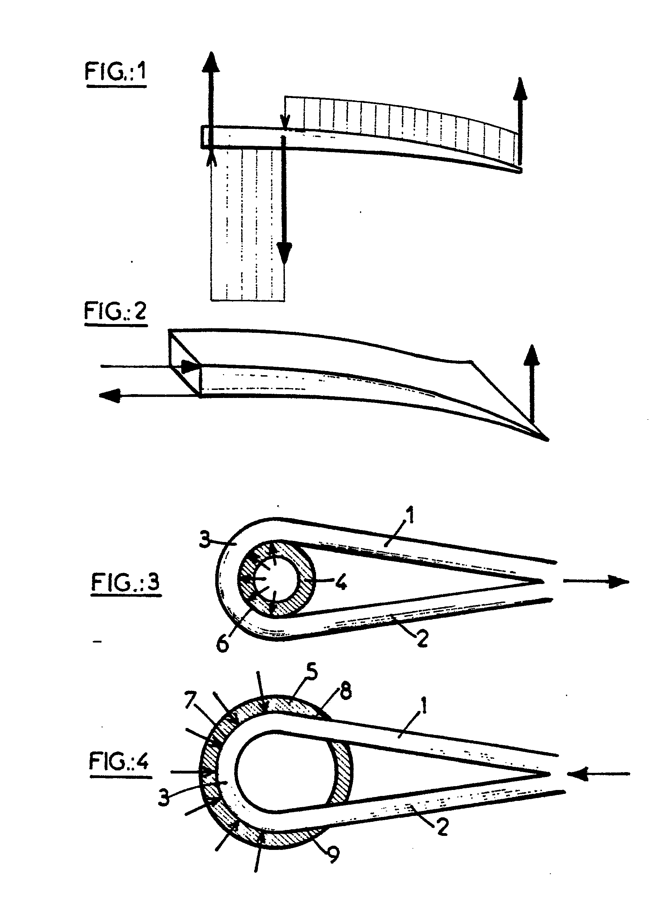

La figure 1 montre la répartition des efforts dans une lame encastrée par une de ses extrémités et soumise à un effort dirigé dans le plan perpendiculaire aux plans d'encastrement. La partie encastrée supporte des efforts de cisaillement importants qui sont généralement bien tolérés par les lames métalliques mais sont inacceptables pour des lames en composite.

En effet les composites unidirectionnels en fibre de verre généralement utilisées pour la réalisation de ressorts de suspension maintenus par des appuis éloignés présentent une faible tenue au cisaillement interlaminaire et au matage (pression d'appui) perpendiculaire aux fibres. De plus, à raideur équivalente, la forme issue de l'utilisation du matériau composite est différente de celle de l'acier et demande en général plus d'inertie et moins de largeur.

Pour diminuer les efforts de cisaillement, la solution consiste à reprendre le moment d'encastrement par un couple d'efforts antisymétriques parallèlement aux fibres (figure 2).

La valeur des efforts à introduire est liée à la hauteur du profilé tandis que la pression de matage est liée à la largeur de l'appui. Ces conditions, associées aux contraintes liées aux efforts de bord ou d'extrémité, conduisent à une conception par enroulement des fils autour d'une pièce cylindrique intérieure (figure 3) pour la traction et en appui à l'intérieur d'une pièce cylindrique ou fourrure (figure 4) pour la compression. Le fond de la fourrure joue un double rôle de transmission des efforts à l'axe d'accrochage du ressort et de maintien de l'ouverture de la fourrure située du côté des charges de compression.

La reprise des efforts latéraux est réalisée par appui des parties latérales de la lame sur les côtés de l'ouverture ou sur des butées comme il sera ultérieurement décrit.

Les lames en composite destinées à remplacer les ressorts à lames traditionnels ont un profil évolutif, dans le plan de symétrie vertical, de l'extrémité d'encastrement épaisse à l'extrémité souple, mince, et, dans un plan perpendiculaire au plan de symétrie vertical, de l'extrémité d'encastrement, mince, à l'extrémité souple, large. En effet, l'optimisation des sections en contrainte selon la loi des moments de flexion entraîne une variation des inerties qui, associée à une section d'aire sensiblement constante pour des raisons de continuité de fibres et de facilité d'industrialisation, conduit à une hauteur croissante vers l'encastrement.

La transmission des efforts aux pièces d'encastrement nécessite des surfaces de contact suffisantes qui conduisent à un enroulement des fibres de la lame sur des diamètres de dimensions supérieures aux dimensions dans le plan horizontal des extrémités rigides des lames. Il est donc nécessaire d'augmenter les dimensions de la zone d'encastrement de l'extrémité de la lame selon la destination de la lame et l'intensité des efforts auxquels elle est soumise. Diverses solutions, qui seront ci-après décrites, sont applicables.

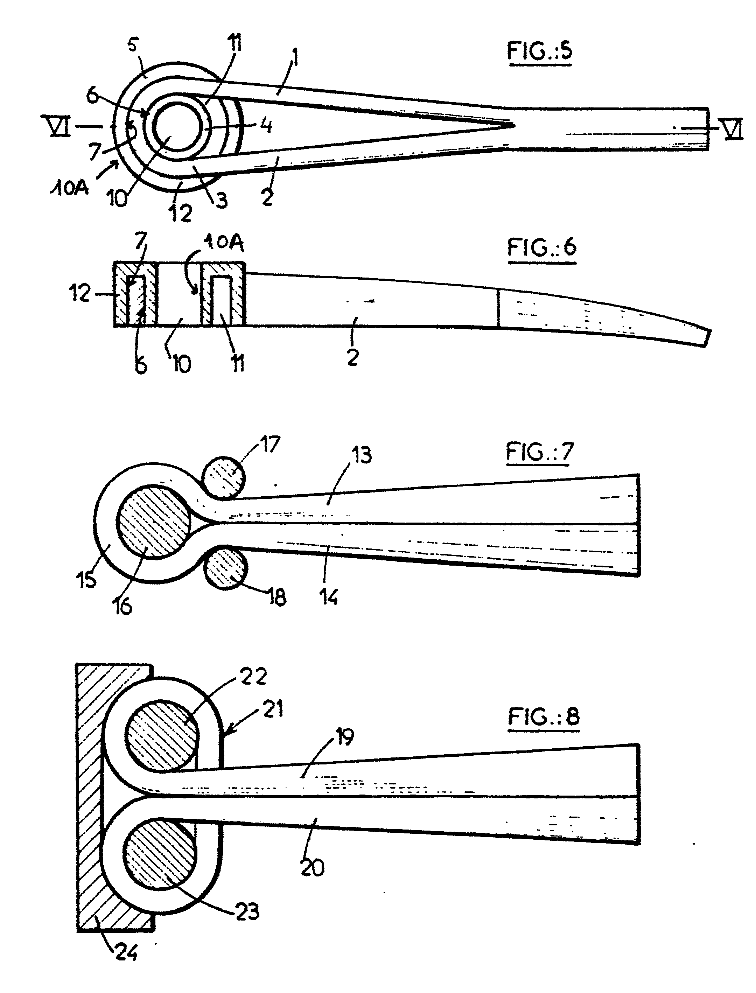

Selon l'exemple de réalisation montré partiellement aux figures 3, 4, et complètement aux Figs. 5 et 6, et destiné par exemple à équiper un dispositif stabilisateur, la forte raideur nécessaire dans le plan transversal perpendiculaire au plan de symétrie vertical n'est pas compatible avec la section pleine calculée. Une solution consiste à diviser, selon le plan de symétrie vertical, l'extrémité rigide en deux parties dont les sections disposées parallèlement assurent le respect des inerties cherchées et de la section adoptée. Ainsi se trouve également résolu l'accroissement des dimensions de la zone d'encastrement et la possibilité d'enrouler les fibres selon une surface de diamètre suffisant.

Les lames ainsi conçues présentent donc vers l'extrémité rigide deux parties évolutives, ou bras 1, 2 divergents de part et d'autre du plan de symétrie vertical, reliés à leur extrémité par une boucle 3.

Du fait de la divergence des sections, les efforts cheminent principalement en traction-compression dans le matériau composite et non en cisaillement pur.

Le dispositif d'encastrement est constitué selon la forme de réalisation représentée aux figures 3 à 6, par la boucle 3 et des éléments d'appui 4, 5 présentant des surfaces d'appui 6, 7 au moins partiellement cylindriques de rayon correspondant au rayon d'au moins une partie de la surface intérieure ou extérieure d'enroulement de la boucle avec laquelle elles coopèrent selon des génératrices parallèles à l'axe de la boucle. L'axe de la boucle est dans le plan de symétrie vertical de la lame et perpendiculaire à l'axe de symétrie longitudinal de l'extrémité voisine de la lame.

L'élément d'appui 4 (figure 3) est constitué d'une pièce tubulaire au moins semi-cylindrique, disposée à l'intérieur de la boucle dont la partie cylindrique coopère avec la partie de surface cylindrique intérieure de la boucle, pour résister à une force de traction.

La force de traction applique étroitement la surface intérieure de la boucle sur la surface de l'élément d'appui 4, même en présence d'un effort de flexion perpendiculaire au plan de la boucle.

L'élément d'appui 5 est constitué d'une pièce au moins partiellement cylindrique ou fourrure enserrant l'extrémité de la boucle. Une force de compression, dont la direction est indiquée par la flèche, a pour effet d'appuyer la surface cylindrique de l'extrémité de la boucle dans la fourrure. En outre la reprise des efforts latéraux vers l'extérieur des bras est obtenue par appui d'une partie latérale des bras sur au moins deux surfaces d'appui 8, 9 rectangulaires formées par l'ouverture de la fourrure pour le passage de la boucle.

L'élément tubulaire central aussi bien que la fourrure périphérique transmettent directement ou indirectement les efforts au dispositif prévu à l'extrémité rigide de la lame.

Le dispositif comporte ainsi un élément d'appui double (figures 5 et 6) constitué d'une pièce cylindrique 10A traversée par une ouverture axiale 10 et présentant dans une de ses faces planes un logement annulaire coaxial 11 de section correspondant à la section de la boucle, au moins une partie de la paroi extérieure 12 faisant office de fourrure étant enlevée pour permettre le passage des deux bras 1, 2 de la lame.

Le remplacement des dispositifs à lames métalliques dans un dispositif stabilisateur par un dispositif d'encastrement et la lame composite associée tels que décrit ci-dessus nécessite simplement le montage de l'axe de fixation à la plaque d'attelage dans l'ouverture 10 et la fixation à l'extrémité de l'axe du frein de limitation de rotation.

Un autre exemple d'application d'une telle réalisation se trouve dans l'atterrisseur auxiliaire d'avion de tourisme. La roulette de queue est montée sur une lame de ressort devant être souple dans le sens vertical et rigide dans le sens horizontal. Le dispositif doit être susceptible de se déverrouiller dans le sens travers en cas de surcharge de débattement.

Les exemples de réalisation décrits ci-après sont également utilisables dans cette application.

Selon une autre forme de réalisation, pour des applications dans lesquelles l'inertie recherchée et la section adoptée de la lame sont compatibles, l'extrémité rigide de la lame est divisée, selon son plan de symétrie vertical, en deux bras (figure 7) 13, 14 parallèles, en contact ou non, reliés par une boucle 15 formée, comme dans les exemples précédents, par enroulement des fibres selon une surface cylindrique, délimitant une ouverture centrale. Afin d'éviter le décollement de la surface interne de la boucle de l'axe de fixation 16 cylindrique occupant l'ouverture, on prévoit deux éléments d'appui 17, 18 placés de part et d'autre des bras 13,14 et contre la surface de raccordement à la boucle. De préférence, ces éléments présentent des surfaces d'appui convexes d'un rayon de courbure approximativement égal à celui des surfaces concaves de raccordement.

Selon une autre forme de réalisation représentée figure 8, l'extrémité rigide de la lame est constituée par deux bras 19, 20 parallèles ou convergents vers l'encastrement qui sont reliés entre eux par une double boucle 21, déterminant deux ouvertures d'axes parallèles et espacés d'au moins l'épaisseur des deux bras 19, 20. Un élément d'appui 24 est disposé contre la surface extérieure des boucles à l'opposé des bras. La surface d'appui de l'élément sur les boucles est conformée de manière à s'appuyer contre des portions de surface cylindrique comprises au moins sur la partie arrière des boucles.

L'élément d'appui empêche le décollement des boucles et maintient un contact étroit avec les axes cylindriques 22, 23 passant dans les ouvertures lorsqu'un effort de compression est appliqué à la lame.

Il est évident que l'invention n'est pas limitée aux formes de réalisations ci-dessus décrites mais s'applique dans tous les cas où il est nécessaire de réaliser l'encastrement avec appuis rapprochés de l'extrémité d'une lame en matériau composite. Le composant fibreux peut se présenter sous la forme de nappes de fibres, d'étoffes tissées ou non tissées en matière organique ou minérale et est choisi en fonction des caractéristiques désirées de la lame élastique.

## Revendications

1. Lame élastique en matériau composite unidisectionnel travaillant en flexion, présentant dans son plan de symétrie vertical et sur au moins une partie de sa longueur une épaisseur croissant vers une de ses extrémités, et dans son plan horizontal, une largeur décroissant vers la même extrémité, l'extrémité de plus grande épaisseur présentant une ouverture susceptible de coopérer avec des moyens d'encastrement, l'axe de ladite ouverture étant dans le plan de symétrie vertical de la lame qui est dans le plan de flexion dans lequel s'exercent les efforts produisant la flexion, caractérisée en ce que ladite ouverture est constituée d'au moins une boucle (3, 15, 21) formée par enroulement d'un composant fibreux constituant la lame, et en ce que chacune des faces interne et externe de ladite boucle prend appui sur sa hauteur et par tout ou partie de sa périphérie sur un élément d'appui correspondent des moyens d'encastrement (101; 16, 17, 18; 22, 23, 24).

2. Lame selon la revendication 1, caractérisée en ce que la lame en matériau composite est partagée selon son plan de symétrie vertical, au moins près de son extrémité épaisse, en deux bras (1, 2; 13, 14; 19, 20) qui forment la (3, 15) ou les boucles (21).

3. Lame selon la revendication 2, caractérisée en ce que les bras (1, 2) sont divergents en direction de la boucle (3).

4. Lame selon la revendication 2, caractérisée en ce que les bras sont convergents (19, 20) en direction de la ou des boucles (21).

5. Lame selon la revendication 2, caractérisée en ce qu'un des éléments d'appui (4, 16, 22, 23) est constitué d'un corps au moins semi-cylindrique de rayon correspondant au rayon d'au moins une partie de la surface intérieure de la boucle avec laquelle il coopère.

6. Lame selon la revendication 2, caractérisée en ce qu'un des éléments d'appui (3; 17, 18; 19, 20) est constitué d'un élément au moins semi-cylindrique de rayon correspondant au rayon d'au moins une partie de la surface extérieure de la boucle avec laquelle il coopère.

7. Lame selon la revendication 2, caractérisée en ce que les moyens d'encastrement sont constitués d'une pièce cylindrique traversée par une ouverture axiale (10) et présentant dans une de ses faces planes un logement annulaire (11) coaxial de section correspondant à la section de la boucle, au moins une partie de la paroi extérieure (12) étant enlevée pour permettre le passage des bras (1, 2) de la pièce en matériau composite.

8. Lame selon la revendication 2, caractérisée en ce que les moyens d'encastrement comportent un axe cylindrique (16) coopérant avec la surface interne de la boucle (15) et deux éléments (17, 18) disposés de part et d'autre des bras (13, 14) et contre les surfaces concaves de raccordement à la boucle, lesdits éléments présentant des surfaces d'appui convexes d'un rayon de courbure approximativement égal à celui des surfaces concaves de raccordement.

9. Lame selon la revendication 2, caractérisée en ce que la lame est enroulée en sens opposé pour former deux boucles entre lesquelles sortent les bras et en ce que les moyens d'encastrement comportent deux axes cylindriques (22, 23) coopérant avec les surfaces intérieures des boucles et un élément d'appui (24) disposé contre la surface extérieure des boucles à l'opposé des bras, la surface d'appui dudit élément étant conformée de manière à s'appuyer contre des portions de surfaces cylindriques comprises au moins sur la partie arrière des boucles.

10. Lame selon la revendication 7, caractérisée en ce que la paroi extérieure (12) forme au passage des bras (1, 2) des surfaces d'appui (8, 9) pour lesdits bras.

## Claims

1. Resilient leaf made of an unidirectional composite material working in flexure having, in its vertical plane of symmetry and over at least a part of its length, a thickness increasing towards one of its ends, and in its horizontal plane, a width decreasing towards the same end, the thicker end having an opening capable of cooperating with mounting means, the axis of the said opening being in the vertical plane of symmetry of the leaf which is in the plane of flexure in which the stresses producing the flexure are acting, characterized in that the said opening is made of at least one loop (3, 15, 21) formed by a winding of a fibrous component forming the leaf, and in that each of the internal and external faces of said loop rests over its height and along at least part of its periphery on a corresponding supporting member forming part of the mounting means (10A; 16, 17, 18; 22, 23, 24).

2. Leaf as claimed in claim 1, characterized in that the leaf made of a composite material is divided along its vertical plane of symmetry, at least close to its thick end, into two arms (1, 2; 13, 14; 19, 20) which form the loop (3, 15) or the loops (21).

3. Leaf as claimed in claim 2, characterized in that the arms (1, 2) are divergent in the direction of the loop (3).

4. Leaf as claimed in claim 2, characterized in that the arms are convergent (19, 20) in the direction of the loop or loops (21).

5. Leaf as claimed in claim 2, characterized in that at least one of the supporting members (4, 16, 22, 23) consists of an at least semi-cylindrical body with a radius corresponding to the radius of at least a part of the inner surface of the loop with which it cooperates.

6. Leaf as claimed in claim 2, characterized in that at least one of the supporting members (3; 17, 18; 19, 20) consists of an at least semi-cylindrical member with a radius corresponding to the radius of at least a part of the outer surface of the loop with which it cooperates.

7. Leaf as claimed in claim 2, characterized in that the mounting means consist of a cylindrical component pierced by an axial opening (10) and having, in one of its planar faces, a coaxial annular housing (11) with a cross-section corresponding to the cross-section of the loop, at least a part of the outer wall (12) being removed to enable the arms (1, 2) of the component made of a composite material to pass through.

8. Leaf as claimed in claim 2, characterized in that the mouting means comprise a cylindrical pivot (16) cooperating with the inner surface of the loop (15) and two members (17, 18) arranged on each side of the arms (13, 14) and against the concave surfaces for connection to the loop, the said members having convex supporting surfaces with a radius of curvature which is approximately equal to that of the concave surfaces of connection.

9. Leaf as claimed in claim 2, characterized in that the leaf is wound in two opposite directions so as to form two loops between which the arms project and in that the mounting means comprise two cylindrical pivots (22, 23) cooperating with the inner surfaces of the loops and a supporting member (24) arranged against the outer surface of the loops, facing the arms, the supporting surface of the said element being shaped so that it presses against cylindrical surface portions included at least on the rear part of the loops.

10. Leaf as claimed in claim 7, characterized in that the outer wall (12) forms supporting surfaces (8, 9) for the arms in the zone where they pass through it.

## Patentansprüche

1. Einsinnig auf Biegung beanspruchbare Verbund-Blattfeder aus faserverstärktem Kunststoff, die in ihrer Vertikal-Symmetrieebene und zumindest auf einem Teil ihrer Länge eine zu einem Ende hin zunehmende Dicke und in ihrer Horizontalebene eine zu demselben Ende hin abnehmende Breite aufweist, wobei das Ende mit größerer Dicke eine Öffnung bildet, die mit einer Einspann-Einrichtung zusammenwirken kann, und wobei die Achse dieser Öffnung in derjenigen Vertikal-Symmetrieebene der Feder liegt, in welcher sich die Biegeebene befindet, in der die die Biegung hervorrufenden Kräfte auftreten, dadurch gekennzeichnet, daß die Öffnung aus wenigstens einer Schleife oder Öse (3, 15, 21) besteht, die durch Einrollen eines Faserkörpers der Feder gebildet ist, und daß jede der Innen- und Außenflächen der Schleife oder Öse über ihre Höhe und über den Gesamtumfang oder einen Teil davon an einem zugeordneten Anlagekörper der Einspann-Einrichtung (10A; 16, 17, 18; 22, 23, 26) angreift.

2. Feder nach Anspruch 1, dadurch gekennzeichnet, daß die Verbundkörper-Feder zumindest nahe ihrem dickeren Ende in ihrer Vertikal-Symmetrieebene in zwei Arme (1, 2; 13, 14; 19, 20) aufgeteilt ist, welche die Schleife oder Öse (3, 15) bzw. die Schleifen oder Ösen (21) bilden.

3. Feder nach Anspruch 2, dadurch gekennzeichnet, daß die Arme (1, 2) in Richtung der Schleife oder Öse (3) divergieren.

4. Feder nach Anspruch 2, dadurch gekennzeichnet, daß die Arme (19, 20) in Richtung der Schleifen oder Ösen (21) konvergieren.

5. Feder nach Anspruch 2, dadurch gekennzeichnet, daß einer der Anlagekörper (4, 16, 22, 23) aus einem wenigstens halbzylindrischen Körper besteht, dessen Radius demjenigen wenigstens eines Teils der Innenfläche der mit ihm zusammenwirkenden Schleife oder Öse entspricht.

6. Feder nach Anspruch 2, dadurch gekennzeichnet, daß einer der Anlagekörper (5; 17, 18; 19, 20) aus einem wenigstens halbzylindrischen Körper besteht, dessen Radius demjenigen wenigstens eines Teils der Außenfläche der mit ihm zusammenwirkenden Schleife oder Öse entspricht.

7. Feder nach Anspruch 2, dadurch gekennzeichnet, daß die Einspann-Einrichtung einen zylindrischen Körper (10A) aufweist, der von einer Axialöffnung (10) durchsetzt ist und an einer seiner ebenen Flächen eine koaxiale Ringausnehmung (11) hat, deren Querschnitt demjenigen der Schleife oder Öse entspricht, wobei zumindest ein Teil der Außenwand (12) zwecks Durchganges der Arme (1, 2) des Verbundkörpers erhöht ist.

8. Feder nach Anspruch 2, dadurch gekennzeichnet, daß die Einspann-Einrichtung einen mit der Innenfläche der Schleife oder Öse (15) zusammenwirkenden Befestigungsbolzen (16) sowie zwei beiderseits der Arme (13, 14) gegenüber den konkaven Anlageflächen der Schleife bzw. Öse angeordnete Elemente (17, 18) aufweist, welche konvexe Anlageflächen bilden, deren Krümmungsradius ungefähr gleich demjenigen der konkaven Anlageflächen ist.

9. Feder nach Anspruch 2, dadurch gekennzeichnet, daß die Feder in entgegengesetzten Richtungen eingerollt ist, um zwei Schleifen bzw. Ösen zu bilden, zwischen denen die Arme heraustreten, und daß die Einspann-Einrichtung zwei mit den Innenflächen der Schleifen bzw. Ösen zusammenwirkende Bolzen (22, 23) sowie einen Anlagekörper (24) aufweist, welcher gegenüber der Außenfläche der Schleifen bzw. Ösen entgegengesetzt zu den Armen eingeordnet ist, wobei die Anlagefläche des Anlagekörpers zum Formschluß mit den Teilen der zylindrischen Flächen ausgebildet ist, die zumindest von den rückwärtigen Teilen der Schleifen bzw. Ösen gebildet sind.

10. Feder nach Anspruch 7, dadurch gekennzeichnet, daß die Außenwand (12) beim Durchgang der Arme (1, 2) Anlageflächen (8, 9) für letztere bildet.

FIG.:1

FIG.:2

FIG.:3

FIG.:4

EP 0 214 001 B1

FIG.:5

FIG.:6

FIG.:7

FIG.:8